# FASCICULE DE BREVET EUROPEEN

(11) **EP 2 327 589 B1**
(45) Date de publication et mention de la délivrance du brevet: **04.04.2012**
(21) Numéro de dépôt: 10189111.7
(22) Date de dépôt: 27.10.2010
(51) Int. Cl.: B60R 13/10

(54) **Dispositif de protection des plaques d'immatriculation.**
Schutzvorrichtung für Nummernschilder
Device for protecting number plates

(30) Priorité: 25.11.2009 FR 0958345
(43) Date de publication de la demande: 01.06.2011
(73) Titulaire: Garabiol, Galien, 92380 Garches (FR)
(72) Inventeur: Garabiol, Galien, 92380 Garches (FR)
(74) Mandataire: Mazabraud, Xavier

(56) Documents cités:
- CH-A- 552 488
- CH-A5- 659 905
- DE-A1- 2 644 554
- US-A- 2 003 343
- US-A1- 2006 156 595

## Description

La présente invention a pour objet un dispositif de protection des plaques d'immatriculation. Elle concerne notamment, mais non exclusivement, un dispositif de protection des plaques d'immatriculation montés à l'avant de véhicules automobiles tels que notamment des voitures, des autobus, des autocars, des fourgonnettes, des camions, des motocyclettes. Un dispositif selon le préambule de la revendication 1 est décrit par CH552488 A.

On sait que les chocs et les touchettes répétées fragilisent et endommagent les plaques d'immatriculation. Or, il s'avère que les risques de collision et de détérioration s'accroissent en raison notamment de :
- l'augmentation de la densité du trafic automobile;
- l'exiguïté des places de stationnement ;
- l'augmentation du nombre d'aires de stationnement où les véhicules sont disposés par paires, face à face ;
- l'augmentation du nombre de dispositifs d'attelage comprenant chacun, à leur extrémité libre, une boule d'attelage disposée à hauteur des plaques d'immatriculation avant.

On sait également que dans la plupart des pays industrialisés, il existe des dispositions législatives et/ou réglementaires établissant une obligation de maintenir les plaques d'immatriculation en bon état, afin de garantir une bonne visibilité des informations qu'elles portent.

Or, généralement, les plaques d'immatriculation détériorées sont laissées en l'état ou réparées sommairement sans permettre de satisfaire auxdites obligations légales. Ces plaques d'immatriculation peuvent également être remplacées mais l'achat d'une nouvelle plaque et son installation constituent une opération relativement contraignante.

L'invention a donc plus particulièrement pour objectif de résoudre ce problème en proposant un dispositif de protection des plaques d'immatriculation qui permet de prévenir les chocs, et pouvant être facilement installé.

A cet effet, l'invention propose un dispositif de protection des plaques d'immatriculation selon la revendication 1.

La longueur des rainures, la distance séparant le fond des deux rainures et la largeur de chaque rainure correspondent sensiblement à la longueur, la largeur et l'épaisseur d'une plaque d'immatriculation. De cette façon, en procédant à un tirage dans le sens transversal, il est possible d'écarter les deux bordures l'une par rapport à l'autre, ce qui permet d'aménager un espace suffisant pour pouvoir y placer une plaque d'immatriculation, et introduire les bords longitudinaux de cette plaque dans lesdites rainures. Ainsi, après avoir cessé cet effort de tirage, le dispositif de protection selon l'invention reprend sa forme initiale, ce qui permet de maintenir en position la plaque d'immatriculation.

Selon une variante d'exécution de l'invention, chaque bordure longitudinale du type susdit comprend une rainure longitudinale s'étendant sur une partie de la face intérieure de la bordure correspondante. De plus, chacune desdites faces intérieures comporte à leurs deux extrémités un évidement permettant de constituer un espace de guidage facilitant l'insertion d'une plaque d'immatriculation dans lesdites rainures.

Préférentiellement, le dispositif de protection selon l'invention est constitué d'une matière élastique à mémoire de forme pouvant être par exemple du caoutchouc, un élastomère ou un dérivé d'élastomère.

De manière avantageuse, la présence desdites bordures permet de protéger la plaque d'immatriculation contre les chocs et les collisions, tout en assurant une visibilité parfaite de cette dernière. Ces bordures, lorsqu'elles sont constituées d'une matière élastique, peuvent également servir de tampons amortisseurs.

De manière préférentielle, le dispositif de protection selon l'invention est fixé au véhicule au moyen des rivets de la plaque d'immatriculation qui constituent généralement le moyen d'assemblage des plaques d'immatriculation.

Selon une variante d'exécution préférentielle de l'invention, la face antérieure du dispositif de protection comporte également deux bordures transversales en saillie qui permettent d'optimiser le maintien de la plaque d'immatriculation.

Selon une variante d'exécution préférentielle de l'invention, le fond du dispositif de protection peut comporter au moins un orifice, conformé de manière à pouvoir y engager les tiges des présentoirs commerciaux. De cette façon, les dispositifs de protection suspendus auxdites tiges peuvent être proposés à la vente en se dispensant avantageusement de l'utilisation d'emballages.

Un mode d'exécution de l'invention sera décrit ci-après, à titre d'exemple non limitatif, avec référence aux dessins annexés dans lesquels :
La figure 1 est une représentation schématique, en perspective, de la face antérieure du dispositif de protection selon l'invention.
La figure 2 est une représentation schématique, selon une vue de trois - quarts en perspective, des faces antérieure et inférieure du dispositif de protection représenté sur la figure 1.
La figure 3 est une représentation schématique, selon une vue transversale, d'une face latérale gauche ou droite du dispositif de protection selon l'invention.
La figure 4 est une représentation schématique, en perspective, de la face postérieure du dispositif de protection selon l'invention.
La figure 5 est une représentation schématique, de la face inférieure ou supérieure du dispositif de protection selon l'invention.
La figure 6 est une représentation schématique, en perspective, de la face antérieure du dispositif de protection selon une variante d'exécution de l'invention.
La figure 7 est une représentation schématique, selon une vue de trois - quarts en perspective, du dispositif de protection représenté sur la figure 6.
La figure 8 est une représentation schématique, selon une vue de trois - quarts en perspective, des faces antérieure et inférieure du dispositif de protection représenté sur la figure 6.
La figure 9 est une représentation schématique, selon une vue transversale, d'une face latérale gauche ou droite du dispositif de protection représenté sur la figure 6.
La figure 10 est une représentation schématique, en perspective, de la face postérieure du dispositif de protection selon l'invention.

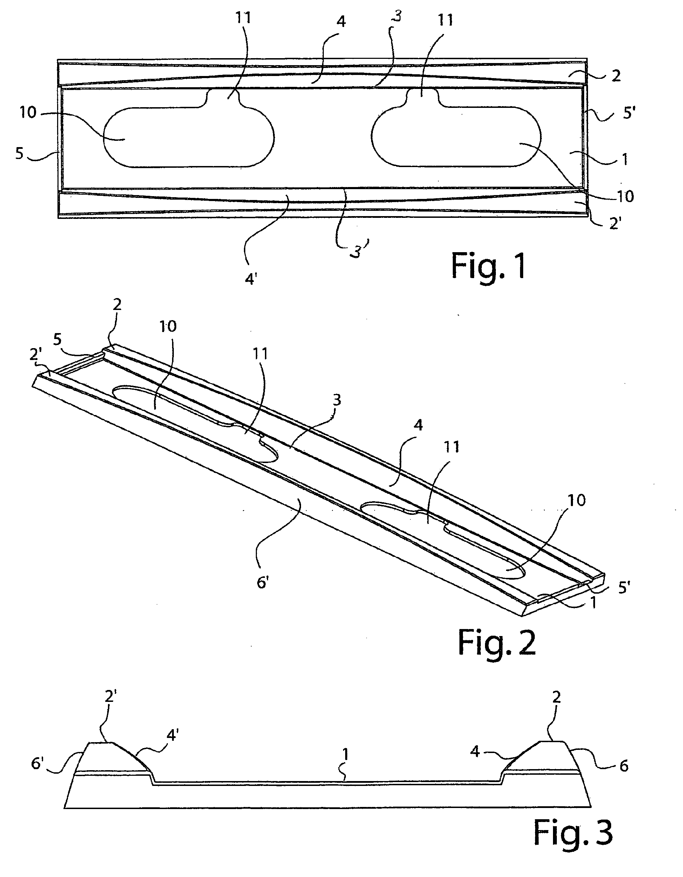

Dans cet exemple, tel que cela est représenté notamment sur les figures 1 et 2, le dispositif de protection selon l'invention comprend un fond 1 sensiblement plat dont la face antérieure comporte deux bordures longitudinales 2, 2' en saillie comprenant chacune une rainure longitudinale 3, 3' qui s'étend sur la face intérieure 4, 4' de la bordure correspondante 2, 2', ces deux faces intérieures 4, 4' étant disposées sensiblement en regard l'une de l'autre de manière à ce que ces deux rainures 3, 3' (la rainure inférieure n'étant pas représentée) soient comprises dans un même plan.

La longueur des rainures 3, 3', la distance séparant le fond des deux rainures 3, 3' et la largeur ou hauteur de chaque rainure 3, 3' correspondent sensiblement à la longueur, la largeur et l'épaisseur d'une plaque d'immatriculation.

Ainsi à titre d'exemple, chaque rainure 3, 3' peut présenter les dimensions suivantes :
- une longueur dont la valeur est comprise dans un intervalle allant de 25 à 570 millimètres, cette longueur étant préférentiellement égale à 522 millimètres ;
- une largeur dont la valeur est comprise dans un intervalle allant de 1 à 13 millimètres, cette valeur étant préférentiellement égale à 5,2 millimètres ;
- une profondeur dont la valeur est comprise dans un intervalle allant de 0 à 14 millimètres, cette profondeur étant préférentiellement égale à 4 millimètres ;
de plus, la valeur de la distance séparant le fond des deux rainures 3, 3' est comprise dans un intervalle allant de 30 à 260 millimètres, cette distance étant préférentiellement égale à 112 millimètres.

De même, toujours à titre d'exemple, chaque bordure 2, 2' peut présenter les dimensions suivantes :
- une longueur dont la valeur est comprise dans un intervalle allant de 25 à 590 millimètres, cette longueur étant préférentiellement égale à 532 millimètres ;
- une largeur dont la valeur est comprise dans un intervalle allant de 9 à 39 millimètres, cette largeur étant préférentiellement égale à 29 millimètres ;
- une profondeur dont la valeur est comprise dans un intervalle allant de 5 à 35 millimètres, cette profondeur étant préférentiellement égale à 20 millimètres ; la hauteur de la face intérieure 4, 4' de chacune des bordures 2, 2' est comprise dans un intervalle allant de 1 à 10 millimètres, cette hauteur étant préférentiellement égale à 5,2 millimètres ;
de plus, la valeur de la distance séparant les deux bordures 2, 2' est comprise dans un intervalle allant de 30 à 260 millimètres, cette distance étant préférentiellement égale à 104 millimètres afin de permettre à une plaque d'immatriculation standard de pouvoir être placée dans l'espace délimité par ces bordures 2, 2'.

La largeur du dispositif selon l'invention est comprise dans un intervalle allant de 120 à 190 millimètres, cette largeur étant préférentiellement égale à 161 millimètres.

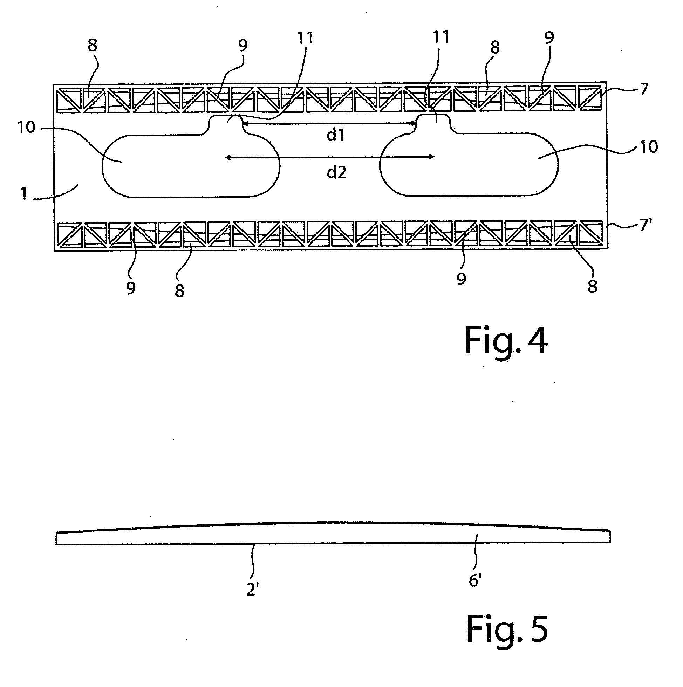

En outre, de manière avantageuse, tel que cela est notamment représenté sur la figure 5, lesdites bordures 2, 2' peuvent présenter une forme sensiblement bombée afin d'optimiser la protection de la plaque d'immatriculation contre les chocs, et de protéger la face des véhicules sur laquelle le dispositif selon l'invention est fixé.

Toujours à titre d'exemple, l'angle constitué par le fond 1 du dispositif de protection et la face interne chanfreinée 4, 4' de chaque bordure 2, 2' est compris dans un intervalle allant de 10° à 90°, la valeur de cet angle étant préférentiellement égale à 45°. De même, l'angle constitué par le fond 1 du dispositif de protection et la face externe chanfreinée 6, 6' de chaque bordure 2, 2' est compris dans un intervalle allant de 3° à 35°, la valeur de cet angle étant préférentiellement égale à 20°. Les valeurs de ces angles permettent d'assurer notamment une visibilité optimale des informations portées par la plaque d'immatriculation ainsi protégée, tout en préservant sa réflectivité.

De cette façon, en procédant à un tirage dans le sens transversal, il est possible d'écarter les deux bordures 2, 2' l'une par rapport à l'autre, ce qui permet d'aménager un espace suffisant pour pouvoir y placer une plaque d'immatriculation, et introduire les bords longitudinaux de cette plaque dans lesdites rainures 3, 3'. Ainsi, après avoir cessé cet effort de tirage, le dispositif de protection selon l'invention reprend sa forme initiale, ce qui permet de maintenir en position la plaque d'immatriculation.

De manière préférentielle, le dispositif de protection selon l'invention est fixé au véhicule au moyen des rivets (non représentés) de la plaque d'immatriculation, qui constituent le moyen le plus répandu pour fixer lesdites plaques.

Selon une variante d'exécution de l'invention, l'ensemble plaque d'immatriculation - dispositif de protection selon l'invention peut être fixé au véhicule au moyen de rivets traversant la matière constituant le dispositif de protection.

Selon une variante d'exécution préférentielle de l'invention, tel que cela est représenté sur les figures 1 et 2, la face antérieure du dispositif de protection comporte également deux bordures transversales 5, 5' en saillie qui permettent d'optimiser le maintien de la plaque d'immatriculation, ces bordures transversales 5, 5' présentant préférentiellement une hauteur plus faible que celle des bordures longitudinales 2, 2' afin d'assurer une visibilité optimale des parties latérales de la plaque d'immatriculation.

Selon une variante d'exécution de l'invention, ces deux bordures transversales 5, 5' peuvent chacune comporter une rainure longitudinale (non représentée) qui s'étend sur la face intérieure de la bordure correspondante 5, 5', ces deux faces intérieures étant disposées sensiblement en regard l'une de l'autre de manière à ce que ces deux rainures soient comprises dans un même plan. De cette manière, en introduisant les bords latéraux de la plaque d'immatriculation dans ces rainures, le maintien de cette plaque est renforcé, les rainures des bordures longitudinales 2, 2' et transversales 5, 5' s'étendant de manière continue sur tout le pourtour constitué par lesdites faces internes.

Selon une autre variante d'exécution de l'invention, seules les bordures transversales 5, 5' comprennent une rainure longitudinale.

A titre d'exemple, chaque bordure 5, 5' peut présenter les dimensions suivantes :
- une longueur dont la valeur est comprise dans un intervalle allant de 30 à 260 millimètres, cette longueur étant préférentiellement égale à 104 millimètres ;
- une largeur dont la valeur est comprise dans un intervalle allant de 1 à 15 millimètres, cette largeur étant préférentiellement égale à 4 millimètres ;
- une hauteur dont la valeur est comprise dans un intervalle allant de 1 à 13 millimètres, cette hauteur étant préférentiellement égale à 5,2 millimètres ;
de plus, la valeur de la distance séparant les deux bordures 5, 5' est comprise dans un intervalle allant de 25 à 570 millimètres, cette distance étant préférentiellement égale à 522 millimètres afin de permettre à une plaque d'immatriculation standard de pouvoir être placée dans l'espace délimité par ces bordures 5, 5'.

Toujours à titre d'exemple, la face interne de chacune de ces bordures transversales 5, 5' est chanfreinée vers l'intérieur de façon à ce que l'angle défini par le chanfrein et ledit fond 1 soit compris dans un intervalle compris entre 10° et 90°, la valeur de cet angle étant préférentiellement égale à 45°.

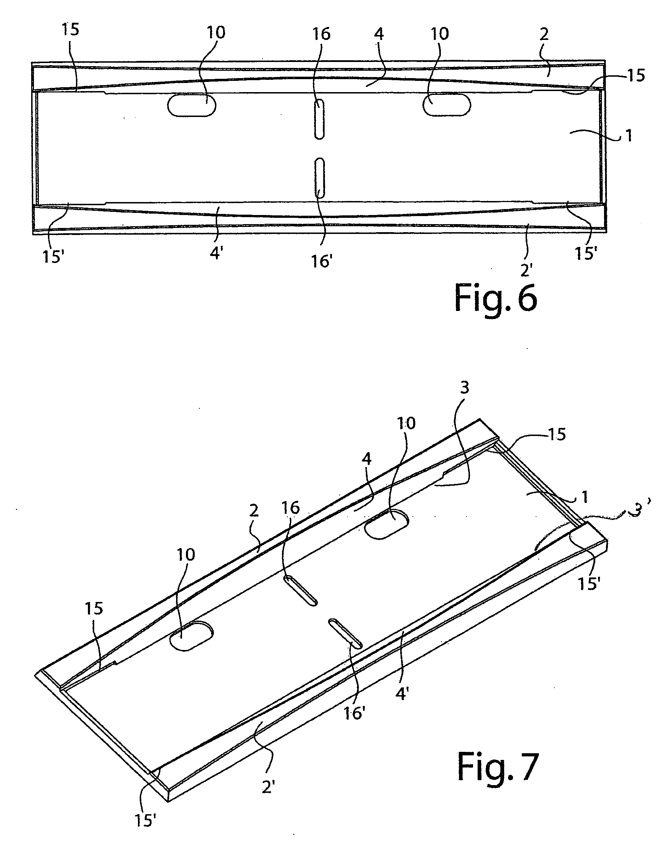

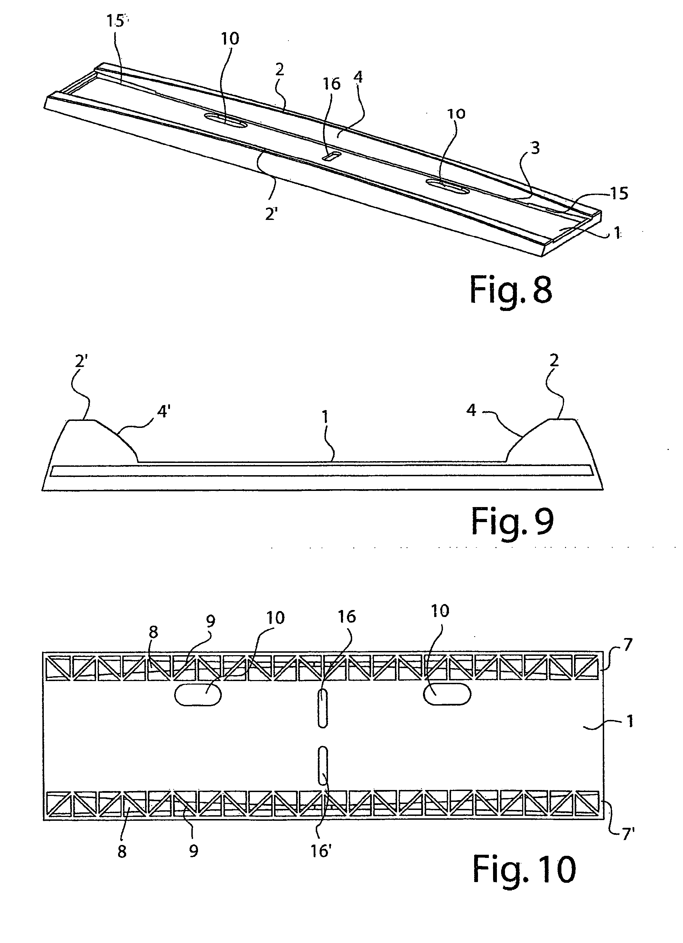

Selon une variante d'exécution de l'invention, tel que cela est représenté notamment sur les figures 7 et 8, chaque bordure longitudinale 2, 2' comprend une rainure longitudinale 3, 3' s'étendant sur une partie de la face intérieure 4, 4' de la bordure correspondante 2, 2'.

De plus, chacune desdites faces intérieures 4, 4' comporte à leurs deux extrémités un évidement 15, 15' permettant de constituer un espace de guidage facilitant l'insertion d'une plaque d'immatriculation dans lesdites rainures 3, 3'.

Plus précisément, chacune des faces intérieures 4, 4' comporte à ses deux extrémités un évidement 15, 15' qui crée un décrochement permettant de faciliter la mise en place d'une plaque d'immatriculation, l'opérateur droitier introduisant la plaque par le côté droit, et l'opérateur gaucher l'introduisant par le côté gauche.

Ainsi, la face antérieure des parties latérales des bordures longitudinales 2, 2' est inclinée, ce qui permet avantageusement de réduire la hauteur desdites bordures 2, 2' à proximité des bords latéraux du dispositif de protection.

La partie médiane non inclinée de chacune des bordures longitudinales 2, 2' présente une longueur sensiblement égale à 100 millimètres.

En outre, chaque rainure 3, 3' est délimitée par le fond 1 du dispositif selon l'invention et le bord longitudinal de la face intérieure 4, 4' de la bordure correspondante 2, 2'.

A titre d'exemple, selon cette variante d'exécution de l'invention, chaque rainure 3, 3' peut présenter les dimensions suivantes :
- une longueur dont la valeur est comprise dans un intervalle allant de 30 à 570 millimètres, cette longueur étant préférentiellement égale à 414 millimètres ;
- une largeur dont la valeur est comprise dans un intervalle allant de 1 à 13 millimètres, cette largeur étant préférentiellement égale à 5,2 millimètres ;
- une profondeur dont la valeur est comprise dans un intervalle allant de 0 à 14 millimètres, cette profondeur étant préférentiellement égale à 4 millimètres ;
de plus, la valeur de la distance séparant le fond des deux rainures 3, 3' est comprise dans un intervalle allant de 30 à 260 millimètres, cette distance étant préférentiellement égale à 112 millimètres.

Selon une variante d'exécution de l'invention, tel que cela est représenté sur les figures 4 et 10, la face postérieure du fond 1 du dispositif de protection comporte deux bordures longitudinales 7, 7', partiellement évidées, de façon à utiliser une quantité moins importante de matière pour la réalisation du dispositif de protection, ce qui permet d'en limiter le coût et le poids.

Plus précisément, chaque bordure 7, 7' comprend une succession de compartiments 8, préférentiellement vingt - quatre, évidés et contigus qui présentent chacun sensiblement une forme géométrique constituée préférentiellement par un rectangle. En outre, de manière préférentielle, chacun de ces compartiments 8 comporte une tige 9 s'étendant en diagonale et conformée de telle manière que l'ensemble de ces tiges 9 constitue une ligne brisée en forme de zigzag, ces tiges 9 permettant notamment de rigidifier l'ensemble.

Tel que cela est représenté sur les figures 4 et 10, les extrémités de chaque segment de la ligne brisée peuvent passer par les coins desdits compartiments 8, mais cela peut également ne pas être le cas.

Selon une variante d'exécution préférentielle de l'invention, le fond 1 du dispositif de protection peut comporter au moins un orifice 10, conformé de manière à pouvoir y engager les tiges des présentoirs commerciaux.

En l'espèce, tel que cela est représenté sur les figures 1, 2 et 4, 6 à 8 et 10, le fond 1 du dispositif de protection comprend deux orifices oblongs 10 dont les côtés supérieurs respectifs peuvent comporter un prolongement 11 sensiblement arrondi délimitant un espace dans lequel lesdites tiges peuvent être engagées, ces prolongements 11 permettant avantageusement d'éviter les déchirures lorsque le dispositif de protection est suspendu.

Avantageusement, la valeur de la distance d1 séparant le point le plus proche des deux dits prolongement 11 est comprise dans un intervalle allant de 0 à 590 millimètres, cette valeur étant préférentiellement égale à 168,5 millimètres qui correspond généralement à la distance séparant deux tiges parallèles d'un présentoir commercial. De cette façon, le dispositif de protection peut être suspendu en introduisant chacune des deux dites tiges parallèles du présentoir dans l'espace délimité par un prolongement 11 correspondant, ce qui permet de se dispenser d'emballages.

En outre, de manière préférentielle, la valeur de la distance d2 séparant les axes transversaux médians de chacun desdits prolongements 11 est comprise dans un intervalle allant de 0 à 590 millimètres, cette valeur étant préférentiellement égale à 202,5 millimètres.

Selon une variante d'exécution de l'invention, tel que cela est représenté sur les figures 6, 7, 8 et 10, le fond 1 du dispositif de protection peut comprendre au moins un orifice oblong 16 supplémentaire axé transversalement, dont l'axe médian se confond sensiblement avec l'axe médian transversal du dispositif selon l'invention ; cet orifice 16 permet de favoriser la torsion longitudinale du dispositif selon l'invention, facilitant ainsi l'insertion d'une plaque d'immatriculation et la pose de l'ensemble qui présente l'avantage de pouvoir facilement se déformer afin d'épouser la forme du pare - chocs. En l'espèce, le dispositif selon cette variante d'exécution de l'invention, tel que représenté sur les figures 6, 7, 8 et 10 comporte deux orifices oblongs transversaux 16, 16' disposés l'un au dessous de l'autre, les orifices oblongs longitudinaux 10 ne comportant pas en l'espèce de prolongements 11 du type susdit.

De manière avantageuse, ces orifices 8, 10, 11, 16, 16' permettent également de procéder à une économie de matière nécessaire à la fabrication du dispositif de protection.

Avantageusement, le dispositif de protection est facile à installer et ne nécessite aucun entretien. Il peut également :
- servir de support publicitaire ;
- être disponible en plusieurs couleurs ou être peint par son propriétaire ;
- réduire la gravité des chocs avec les piétons en évitant les coupures provoquées par le caractère saillant et coupant des plaques d'immatriculation.

## Revendications

1. Dispositif de protection des plaques d'immatriculation,
constitué d'une matière déformable, comprenant un fond (1) sensiblement plat dont la face antérieure comporte deux bordures longitudinales (2, 2') en saillie comprenant chacune une rainure longitudinale (3, 3') qui s'étend sur une partie de la face intérieure (4, 4') de la bordure correspondante (2, 2'), ces deux faces intérieures (4, 4') étant disposées sensiblement en regard l'une de l'autre de manière à ce que ces deux rainures (3, 3') soient comprises dans un même plan, lesdites rainures étant délimitées partiellement par le fond (1) du dispositif et le bord longitudinal de la face intérieure (4, 4') de la bordure correspondante (2, 2'),
**caractérisé en ce que** chacune desdites faces intérieures (4, 4') comporte en outre à ses deux extrémités un évidement (15, 15') permettant de constituer un espace de guidage facilitant l'insertion d'une plaque d'immatriculation dans lesdites rainures (3, 3').

2. Dispositif de protection des plaques d'immatriculation selon la revendication 1,
**caractérisé en ce que** la longueur des rainures (3, 3'), la distance séparant le fond des deux rainures (3, 3') et la largeur de chaque rainure (3, 3') correspondent sensiblement à la longueur, la largeur et l'épaisseur d'une plaque d'immatriculation.

3. Dispositif de protection des plaques d'immatriculation selon la revendication 2,
**caractérisé en ce que** chaque rainure (3, 3') présente les dimensions suivantes :
• une longueur dont la valeur est comprise dans un intervalle allant de 25 à 570 millimètres ;
• une largeur dont la valeur est comprise dans un intervalle allant de 1 à 13 millimètres ;
• une profondeur dont la valeur est comprise dans un intervalle allant de 0 à 14 millimètres ;
de plus, la valeur de la distance séparant le fond des deux rainures (3, 3') est comprise dans un intervalle allant de 30 à 260 millimètres.

4. Dispositif de protection des plaques d'immatriculation selon l'une des revendications 2 et 3,
**caractérisé en ce que** chaque bordure (2, 2') présente les dimensions suivantes :
• une longueur dont la valeur est comprise dans un intervalle allant de 25 à 590 millimètres ;
• une largeur dont la valeur est comprise dans un intervalle allant de 9 à 39 millimètres ;
• une profondeur dont la valeur est comprise dans un intervalle allant de 5 à 35 millimètres ; la hauteur de la face intérieure (4, 4') de chacune des bordures (2, 2') est comprise dans un intervalle allant de 1 à 10 millimètres ;
de plus, la valeur de la distance séparant les deux bordures (2, 2') est comprise dans un intervalle allant de 30 à 260 millimètres.

5. Dispositif de protection des plaques d'immatriculation selon l'une des revendications précédentes,
**caractérisé en ce que** lesdites bordures (2, 2') présentent une forme sensiblement bombée.

6. Dispositif de protection des plaques d'immatriculation selon l'une des revendications précédentes,
**caractérisé en ce que** l'angle constitué par le fond (1) du dispositif de protection et la face interne chanfreinée (4, 4') de chaque bordure (2, 2') est compris dans un intervalle allant de 10° à 90° ; de même, l'angle constitué par le fond (1) du dispositif de protection et la face externe chanfreinée (6, 6') de chaque bordure (2, 2') est compris dans un intervalle allant de 3° à 35°.

7. Dispositif de protection des plaques d'immatriculation selon l'une des revendications précédentes,
**caractérisé en ce qu'**il est constitué d'une matière élastique à mémoire de forme pouvant être du caoutchouc, un élastomère, un dérivée d'élastomère.

8. Dispositif de protection des plaques d'immatriculation selon l'une des revendications précédentes,
**caractérisé en ce qu'**il est fixé au véhicule au moyen des rivets de la plaque d'immatriculation.

9. Dispositif de protection des plaques d'immatriculation selon l'une des revendications précédentes,
**caractérisé en ce que** la face antérieure du dispositif de protection comporte également deux bordures transversales (5, 5') en saillie.

10. Dispositif de protection des plaques d'immatriculation selon la revendication 9,
**caractérisé en ce que** ces deux bordures transversales (5, 5') comportent chacune une rainure longitudinale qui s'étend sur la face intérieure de la bordure correspondante (5, 5'), ces deux faces intérieures étant disposées sensiblement en regard l'une de l'autre de manière à ce que ces deux rainures soient comprises dans un même plan.

11. Dispositif de protection des plaques d'immatriculation selon l'une des revendications 9 à 10,
**caractérisé en ce que** chaque bordure (5, 5') présente les dimensions suivantes :
• une longueur dont la valeur est comprise dans un intervalle allant de 30 à 260 millimètres ;
• une largeur dont la valeur est comprise dans un intervalle allant de 1 à 15 millimètres ;
• une hauteur dont la valeur est comprise dans un intervalle allant de 1 à 13 millimètres ;
de plus, la valeur de la distance séparant les deux bordures (5, 5') est comprise dans un intervalle allant de 25 à 570 millimètres.

12. Dispositif de protection des plaques d'immatriculation selon l'une des revendications précédentes,
**caractérisé en ce que** la face postérieure du fond (1) du dispositif de protection comporte deux bordures longitudinales (7, 7'), partiellement évidées.

13. Dispositif de protection des plaques d'immatriculation selon la revendication 12,
**caractérisé en ce que** chaque bordure (7, 7') comprend une succession de compartiments (8) évidés et contigus ; en outre, chacun de ces compartiments (8) comporte une tige (9) s'étendant en diagonale et conformée de telle manière que l'ensemble de ces tiges (9) constitue une ligne brisée en forme de zigzag.

14. Dispositif de protection des plaques d'immatriculation selon l'une des revendications précédentes,
**caractérisé en ce que** le fond (1) comporte au moins un orifice (10), conformé de manière à pouvoir y engager les tiges des présentoirs commerciaux.

15. Dispositif de protection des plaques d'immatriculation selon la revendication 14,
**caractérisé en ce que** le fond (1) comprend deux orifices oblongs (10) dont les côtés supérieurs respectifs comportent un prolongement (11) sensiblement arrondi délimitant un espace dans lequel lesdites tiges peuvent être engagées.

16. Dispositif de protection des plaques d'immatriculation selon la revendication 15,
**caractérisé en ce que** la valeur de la distance (d1) séparant le point le plus proche des deux dits prolongement (11) est comprise dans un intervalle allant de 0 à 590 millimètres ; la valeur de la distance (d2) séparant les axes transversaux médians de chacun desdits prolongements (11) est comprise dans un intervalle allant de 0 à 590 millimètres.

17. Dispositif de protection des plaques d'immatriculation selon l'une des revendications 9 à 16,
**caractérisé en ce que** la face interne de chacune de ces bordures transversales (5, 5') est chanfreinée vers l'intérieur de façon à ce que l'angle défini par le chanfrein et ledit fond (1) soit compris dans un intervalle compris entre 10° et 90°.

18. Dispositif de protection des plaques d'immatriculation selon l'une des revendications précédentes,
**caractérisé en ce que** le fond (1) comprend au moins un orifice oblong (16) supplémentaire axé transversalement, dont l'axe médian se confond sensiblement avec l'axe médian transversal dudit dispositif.

## Claims

1. A device for protecting number plates,
formed so as to be deformable, comprising a substantially flat bottom (1) whereof the front surface comprises two protruding longitudinal borders (2, 2') each comprising a longitudinal slot (3, 3') that extends over part of the inner surface (4, 4') of the corresponding border (2, 2'), these two inner surfaces (4, 4') being positioned substantially opposite one another so that said two slots (3, 3') are comprised in a same plane, said slots being partially delimited by the bottom (1) of the device and the longitudinal edge of the inner surface (4, 4') of the corresponding border (2, 2'),
**characterized in that** each of said inner surfaces (4, 4') also comprises, at the two ends thereof, a recess (15, 15') making it possible to form a guide space facilitating the insertion of a number plate into said slots (3, 3').

2. The device for protecting number plates according to claim 1, **characterized in that** the length of the slots (3, 3'), the distance separating the bottom of the two slots (3, 3'), and the width of each slot (3, 3') substantially correspond to the length, width and thickness of a number plate.

3. The device for protecting number plates according to claim 2, **characterized in that** each slot (3, 3') has the following dimensions:
• a length whereof the value is comprised in an interval from 25 to 570 millimeters;
• a width whereof the value is comprised in an interval from 1 to 13 millimeters;
• a depth whereof the value is comprised in an interval from 0 to 14 millimeters;
furthermore, the value of the distance separating the bottom of the two slots (3, 3') is comprised in an interval from 30 to 260 millimeters.

4. The device for protecting number plates according to one of claims 2 and 3,
**characterized in that** each border (2, 2') has the following dimensions:
• a length whereof the value is comprised in an interval from 25 to 590 millimeters;
• a width whereof the value is comprised in an interval from 9 to 39 millimeters;
• a depth whereof the value is comprised in an interval from 5 to 35 millimeters; the height of the inner surface (4, 4') of each of the borders (2, 2') is comprised in an interval from 1 to 10 millimeters;
furthermore, the value of the distance separating the two borders (2, 2') is comprised in an interval from 30 to 260 millimeters.

5. The device for protecting number plates according to one of the preceding claims,
**characterized in that** said borders (2, 2') have a substantially curved shape.

6. The device for protecting number plates according to one of the preceding claims,
**characterized in that** the angle formed by the bottom (1) of the protection device and the beveled inner surface (4, 4') of each border (2, 2') is comprised in an interval from 10° to 90°; likewise, the angle formed by the bottom (1) of the protection device and the beveled outer surface (6, 6') of each border (2, 2') is comprised in an interval from 3° to 35°.

7. The device for protecting number plates according to one of the preceding claims,
**characterized in that** it is made up of a shape memory elastic material that can be rubber, an elastomer, or an elastomer derivative.

8. The device for protecting number plates according to one of the preceding claims,
**characterized in that** it is secured to the vehicle using rivets of the number plate.

9. The device for protecting number plates according to one of the preceding claims,
**characterized in that** the front surface of the protection device also comprises two protruding transverse borders (5, 5').

10. The device for protecting number plates according to claim 9, **characterized in that** said two transverse borders (5, 5') each comprise a longitudinal slot that extends over the inner surface of the corresponding border (5, 5'), said two inner surfaces being positioned substantially opposite one another so that said two slots are comprised in a same plane.

11. The device for protecting number plates according to one of claims 9 to 10,
**characterized in that** each border (5, 5') has the following dimensions:
• a length whereof the value is comprised in an interval from 30 to 260 millimeters;
• a width whereof the value is comprised in an interval from 1 to 15 millimeters;
• a height whereof the value is comprised in an interval from 1 to 13 millimeters;
furthermore, the value of the distance separating the two borders (5, 5') is comprised in an interval from 25 to 570 millimeters.

12. The device for protecting number plates according to one of the preceding claims,
**characterized in that** the back surface of the bottom (1) of the protection device comprises two longitudinal borders (7, 7'), partially hollowed out.

13. The device for protecting number plates according to claim 12, **characterized in that** each border (7, 7') comprises a series of adjacent hollowed out compartments (8); furthermore, each of said compartments (8) comprises a rod (9) extending diagonally and shaped so that the set of said rods (9) constitutes a broken line in the shape of a zigzag.

14. The device for protecting number plates according to one of the preceding claims,
**characterized in that** the bottom (1) comprises at least one opening (10), shaped so as to engage the rods of commercial displays therein.

15. The device for protecting number plates according to claim 14, **characterized in that** the bottom (1) comprises two oblong openings (10) whereof the respective upper sides comprise a substantially rounded extension (11) defining a space in which said rods can be engaged.

16. The device for protecting number plates according to claim 15, **characterized in that** the value of the distance (d1) separating the closest point of said two extensions (11) is comprised in an interval from 0 to 590 millimeters; the value of the distance (d2) separating the median transverse axes of each of said extensions (11) is comprised in an interval from 0 to 590 millimeters.

17. The device for protecting number plates according to one of claims 9 to 16,
**characterized in that** the inner surface of each of said transverse borders (5, 5') is inwardly beveled so that the angle defined by the bevel and said bottom (1) is comprised in an interval comprised between 10° and 90°.

18. The device for protecting number plates according to one of the preceding claims,
**characterized in that** the bottom (1) comprises at least one additional oblong opening (16) with a transverse axis, whereof the median axis is substantially combined with the transverse median axis of said device.

## Patentansprüche

1. Vorrichtung zum Schutz von Nummernschildern, bestehend aus einem verformbaren Material, die einen im Wesentlichen flachen Boden (1) umfasst, dessen Vorderseite zwei vorstehende längslaufende Ränder (2, 2') aufweist, die jeweils eine längslaufende Nut umfassen (3, 3'), welche sich entlang eines Teils der Innenseite (4, 4') des entsprechenden Randes (2, 2') erstreckt, wobei diese beiden Innenseiten (4, 4') im Wesentlichen einander gegenüberliegend derartig angeordnet sind, dass sich diese beiden Nuten (3, 3') auf der gleichen Ebene befinden, wobei diese Nuten teilweise durch den Boden (1) der Vorrichtung und die längslaufende Kante der Innenseite (4, 4') des entsprechenden Randes (2, 2') begrenzt sind,
**dadurch gekennzeichnet, dass** jede der Innenseiten (4, 4') außerdem an ihren beiden Enden eine Aussparung (15, 15') aufweist, wodurch ein Führungsraum gebildet wird, der ein Einführen des Nummernschildes in die Nuten (3,3') erleichtert.

2. Vorrichtung zum Schutz von Nummernschildern nach Anspruch 1,
**dadurch gekennzeichnet, dass** die Länge der Nuten (3, 3'), der Abstand zwischen den Böden der beiden Nuten (3, 3') und die Breite jeder Nut (3, 3') im Wesentlichen der Länge, der Breite und der Dicke eines Nummernschildes entsprechen.

3. Vorrichtung zum Schutz von Nummernschildern nach Anspruch 2,
**dadurch gekennzeichnet, dass** jede Nut (3, 3') die folgenden Maße aufweist:
• eine Länge, deren Wert in einem Intervall von 25 bis 570 mm enthalten ist;
• eine Breite, deren Wert in einem Intervall von 1 bis 13 mm enthalten ist;
• eine Tiefe, deren Wert in einem Intervall von 0 bis 14 mm enthalten ist;
außerdem ist der Wert des Abstands zwischen den Böden beider Nuten (3, 3') in einem Intervall zwischen 30 und 260 mm enthalten.

4. Vorrichtung zum Schutz von Nummernschildern nach einem der Ansprüche 2 und 3, **dadurch gekennzeichnet, dass** jeder Rand (2, 2') die folgenden Maße aufweist:
• eine Länge, deren Wert in einem Intervall von 25 bis 590 mm enthalten ist;
• eine Breite, deren Wert in einem Intervall von 9 bis 39 mm enthalten ist;
• eine Tiefe, deren Wert in einem Intervall von 5 bis 35 mm enthalten ist; die Höhe der Innenseite (4, 4') jedes Randes (2, 2') ist in einem Intervall zwischen 1 und 10 mm enthalten;
außerdem ist der Wert des Abstands zwischen den beiden Rändern (2, 2') in einem Intervall von 30 bis 260 mm enthalten.

5. Vorrichtung zum Schutz von Nummernschildern nach einem der vorhergehenden Ansprüche,
**dadurch gekennzeichnet, dass** die Ränder (2, 2') eine im Wesentlichen gewölbte Form aufweisen.

6. Vorrichtung zum Schutz von Nummernschildern nach einem der vorhergehenden Ansprüche,
**dadurch gekennzeichnet, dass** der durch den Boden (1) der Schutzvorrichtung und der abgeschrägten Innenseite (4, 4') jedes Randes (2, 2') gebildete Winkel in einem Intervall von 10° bis 90° enthalten ist; ebenso ist der durch den Boden (1) der Schutzvorrichtung und der abgeschrägten Außenseite (6, 6') jedes Randes (2, 2') gebildete Winkel in einem Intervall von 3° bis 35°enthalten.

7. Vorrichtung zum Schutz von Nummernschildern nach einem der vorhergehenden Ansprüche,
**dadurch gekennzeichnet, dass** sie aus einem elastischen Formgedächtnismaterial besteht, welches Gummi, ein Elastomer, ein Elastomer-Derivat sein kann.

8. Vorrichtung zum Schutz von Nummernschildern nach einem der vorhergehenden Ansprüche,
**dadurch gekennzeichnet, dass** sie an einem Fahrzeug mittels der Nieten des Nummernschildes befestigt wird.

9. Vorrichtung zum Schutz von Nummernschildern nach einem der vorhergehenden Ansprüche,
**dadurch gekennzeichnet, dass** die Vorderseite der Schutzvorrichtung ebenfalls zwei vorstehende querliegende Ränder (5, 5') aufweist.

10. Vorrichtung zum Schutz von Nummernschildern nach Anspruch 9,
**dadurch gekennzeichnet, dass** diese beiden querliegenden Ränder (5, 5') jeweils eine längslaufende Nut aufweisen, die sich über die Innenseite des entsprechenden Randes (5, 5') erstreckt, wobei diese beiden Innenseiten im Wesentlichen derartig einander gegenüberliegend angeordnet sind, dass sich diese beiden Nuten auf einer Ebene befinden.

11. Vorrichtung zum Schutz von Nummernschildern nach einem der Ansprüche 9 bis 10, **dadurch gekennzeichnet, dass** jeder Rand (5, 5') die folgenden Maße aufweist:
• ein Länge, deren Wert in einem Intervall von 30 bis 260 mm enthalten ist;
• eine Breite, deren Wert in einem Intervall von 1 bis 15 mm enthalten ist;
• eine Höhe, deren Wert in einem Intervall von 1 bis 13 mm enthalten ist;
außerdem ist der Wert des Abstands zwischen den beiden Rändern (5, 5') in einem Intervall von 25 bis 570 mm enthalten.

12. Vorrichtung zum Schutz von Nummernschildern nach einem der vorhergehenden Ansprüche,
**dadurch gekennzeichnet, dass** die Hinterseite des Bodens (1) der Schutzvorrichtung zwei teilweise ausgehöhlte, längslaufende Ränder (7, 7') aufweist.

13. Vorrichtung zum Schutz von Nummernschildern nach Anspruch 12,
**dadurch gekennzeichnet, dass** jeder Rand (7, 7') eine Reihe von ausgehöhlten und aneinander angrenzenden Fächern (8) umfasst; darüber hinaus weist jedes dieser Fächer (8) eine sich diagonal erstreckende Stange (9) auf, die derartig geformt ist, dass diese Stangen (9) zusammen eine zickzackförmige gebrochene Linie bilden.

14. Vorrichtung zum Schutz von Nummernschildern nach einem der vorhergehenden Ansprüche,
**dadurch gekennzeichnet, dass** der Boden (1) wenigstens eine Öffnung (10) aufweist, die derartig geformt ist, dass dort die Stangen der Verkaufsständer eingeführt werden können.

15. Vorrichtung zum Schutz von Nummernschildern nach Anspruch 14,
**dadurch gekennzeichnet, dass** der Boden (1) zwei längliche Öffnungen (10) umfasst, deren jeweilige obere Seiten eine im Wesentlichen rundliche Verlängerung (11) aufweisen, die einen Raum abgrenzt, in den die Stangen eingeführt werden können.

16. Vorrichtung zum Schutz von Nummernschildern nach Anspruch 15,
**dadurch gekennzeichnet, dass** der Wert des Abstands (d1) zwischen den am nächsten zusammenliegenden Punkten der beiden Verlängerungen (11) in einem Intervall von 0 bis 590 mm enthalten ist; der Wert des Abstands (d2) zwischen den mittleren Querachsen jeder der Verlängerungen (11) ist in einem Intervall von 0 bis 590 mm enthalten.

17. Vorrichtung zum Schutz von Nummernschildern nach einem der Ansprüche 9 bis 16, **dadurch gekennzeichnet, dass** die Innenseite jedes der querliegenden Ränder (5, 5') derartig nach innen abgeschrägt ist, dass der durch die Abschrägung und den Boden (1) bestimmte Winkel, in einem Intervall zwischen 10° und 90° enthalten ist.

18. Vorrichtung zum Schutz von Nummernschildern nach einem der vorhergehenden Ansprüche,
**dadurch gekennzeichnet, dass** der Boden (1) wenigstens eine zusätzliche quer ausgerichtete längliche Öffnung (16) umfasst, deren mittlere Achse sich im Wesentlichen mit der mittleren Querachse der Vorrichtung überlagert.
